# EUROPÄISCHE PATENTANMELDUNG

(11) **EP 4 707 045 A1**
(43) Veröffentlichungstag der Anmeldung: **11.03.2026**
(21) Anmeldenummer: 25198198.1
(22) Anmeldetag: 26.08.2025
(51) Int. Cl.: B60L 53/16, B60L 53/302, H01R 13/00, H01R 13/66

(54) **FLÜSSIGKEITSGEKÜHLTER LADESTECKER**

(30) Priorität: 03.09.2024 DE 102024125153
(71) Anmelder: Amphenol Tuchel Industrial GmbH, 74080 Heilbronn (DE)
(72) Erfinder: GÖRL, Ann-Kathrin, 74251 Lehrensteinsfeld (DE)
(74) Vertreter: Staeger & Sperling Partnerschaftsgesellschaft mbB

(57) **Zusammenfassung**

Die Erfindung betrifft einen flüssigkeitsgekühlten Ladestecker mit wenigstens zwei Kontaktelementen zur lösbaren, elektrisch leitenden Verbindung eines batterieelektrischen Fahrzeugs mit einer Ladestation, aufweisend ein Ladesteckergehäuse zur Einhausung der wenigstens zwei Kontaktelemente, wobei in einem mittigen Bereich zwischen den wenigstens zwei Kontaktelementen ein separater Zuflussstutzen angeordnet ist, der einen weitgehend symmetrischen Zufluss von Kühlmittel unterstützt.

## Beschreibung

Die Erfindung betrifft einen flüssigkeitsgekühlten Ladestecker mit wenigstens zwei Kontaktelementen zur lösbaren, elektrisch leitenden Verbindung eines batterieelektrischen Fahrzeugs mit einer Ladestation, aufweisend ein Ladesteckergehäuse zur Einhausung der wenigstens zwei Kontaktelemente.

Kontakte im Allgemeinen weisen wenigstens einen elektrisch leitfähigen Kontaktabschnitt zum lösbaren, temporären oder steckenden Verbinden mit einem korrespondierenden Gegenkontaktelement und einen an den Kontaktabschnitt anschließenden Schaftabschnitt zum Befestigen einer elektrischen Leitung an dem Kontakt auf. Ein solcher Kontakt, Steckkontakt, Hochstromkontakt kann an einem Ladestecker oder einer Ladebuchse, beispielsweise zum Aufladen eines elektrisch angetriebenen Fahrzeugs, Verwendung finden. In diesem Fall ist ein Kabel einerseits an eine Ladestation angeschlossen und trägt andererseits ein Steckverbinderteil in Form eines Ladesteckers, der in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen.

Bei einem Ladevorgang von elektrischen Energiespeichern, Akkumulatoren entsteht Wärme infolge der hohen übertragenen elektrischen Leistungen, elektrischen Strömen nicht nur an dem Kabel, mit dem ein Ladestecker beispielsweise mit einer Ladestation verbunden ist, sondern auch an dem Ladestecker und insbesondere innerhalb des Ladesteckers, beispielsweise an Hochstromkontakten, über die ein elektrischer Kontakt mit zugeordneten Gegenkontakten beispielsweise auf Seiten einer Ladebuchse an einem Elektrofahrzeug hergestellt wird, wenn der Ladestecker in die Ladebuchse eingesteckt ist und die elektrische Leistung übertragen wird.

Versorgungs- und Ladeströme können grundsätzlich als Gleichströme oder als Wechselströme übertragen werden, wobei insbesondere Ladeströme und Hochstrombereiche in Form von Gleichstrom eine große Stromstärke, beispielsweise größer als 200 A oder sogar größer als 300 A oder gar 350 A, aufweisen und zu einer Erwärmung des Kabels genauso wie eines mit dem Kabel verbundenen Hochstromkontaktes führen können.

Um batterieelektrisch angetriebene Lastkraftwagen schnell und effizient aufladen zu können, sind in der Regel noch höhere elektrische Ladeleistungen erforderlich. Ein sogenanntes Megawatt Charging System Standard (Abkürzung MCS) soll als Schnellladesystem in der Zukunft Anwendung finden und soll eine Ladeleistung von bis zu 3,75 Megawatt ermöglichen, wobei die Spannung bis zu 1.250 V und der Ladestrom bis zu 3.000 A aufweisen kann.

Unabhängig von der Spezifikation des Ladesteckers oder der Ladesteckerdose (beispielsweise nach der Norm IEC 62196-2 oder IEC 62196-3 oder CHAdeMO-Standard oder nach dem Megawatt Charging System Standard) ist es insbesondere bei höheren und hohen Ladeleistungen ganz besonders wichtig, dass Ladestecker und/oder Ladesteckerdosen sehr sorgfältig und zuverlässig abgedichtet sind.

Hochstromkontakte für Ladestecker, die aus einem elektrisch leitfähigen Material, beispielsweise aus einem Kupferwerkstoff, gefertigt sind, erwärmen sich, wenn ein Ladestrom über die Kontakte, Steckkontakte, Hochstromkontakte fließt, wobei grundsätzlich die Kontakte in Abhängigkeit von dem zu übertragenden Ladestroms so zu dimensionieren sind, dass die Kontakte eine hinreichende Stromtragfähigkeit aufweisen und eine Erwärmung an den Kontaktelementen begrenzt ist. Hierbei gilt, dass ein Kontakt umso größer zu dimensionieren ist, je größer der zu übertragende Ladestrom ist. Einer Skalierung der Kontaktelementgröße mit steigendem Ladestrom sind jedoch aufgrund des damit einhergehenden Bauraumbedarfs, des Gewichts und der Kosten Grenzen gesetzt. Es besteht daher ein Bedürfnis, einen großen Ladestrom mit einem vergleichsweisen klein dimensionierten Kontakt zu übertragen.

Im Rahmen der angestrebten Elektromobilität sind hohe Ladeströme von besonderer Bedeutung. Nur auf diese Weise lassen sich Elektrofahrzeuge beziehungsweise dessen Energiespeicher in kurzer Zeit "auftanken".

Ein im Stand der Technik grundsätzlich bekannter Lösungsansatz ist es, Kontakte, Hochstromkontakte passiv oder aktiv zu kühlen, um auch bei kleiner dimensionierten Bauelementen die Übertragung der elektrischen Leistung mit begrenzter Erwärmung der leistungsübertragenden Bauteile zu realisieren.

Diesen grundsätzlichen Zusammenhang in Verbindung mit elektrisch lösbarer Kontaktierung von elektrisch angetriebenen Fahrzeugen mit einer Ladestation zeigt die DE 10 2018 112 746 A1. Vorgestellt ist hier eine Ladestation für ein Elektrofahrzeug mit einer Basis, einem Stecker mit Steckkontakten zum Einstecken an einer kompatiblen Buchse am Elektrofahrzeug, sowie einem biegbaren Kabel, welches mit einem ersten Ende an der Basis befestigt ist und mit einem dem ersten gegenüberliegenden zweiten Ende des Kabels am Stecker befestigt ist. Der Stecker ist zwischen einer Parkposition und einer Ladeposition hin und her bewegbar. Die Steckkontakte des Steckers zeigen in Parkposition und in Ladeposition in eine gleiche Raumrichtung. Das Kabel und/oder der Stecker weisen eine mit der Basis wirkverbundene interne Kühlung auf, welche von der Basis her mit einem Kühlmedium versorgt wird. Die Kühlung umfasst zumindest einen internen Kühlkreislauf.

Bei der Kühlung derartiger Ladestecker und Ladekabel ist es eine besondere Herausforderung, die Kühlleistung möglichst effektiv zu gestalten und die erzielbare Kühlleistung zu maximieren. Auch interessant ist es, die Kühlleistung bedarfsabhängig zu steuern und auf die jeweilige Erwärmungssituation hin anzupassen.

Um die Zuführung eines fluiden Kühlmediums hinein in den Ladestecker und an die zu kühlenden Komponenten innerhalb des Ladesteckers zu realisieren sind verschiedene konstruktive Konzepte bekannt. Häufig wird eine Kühlfluidzuführung mit separaten Kühlfluidleitungen vorgesehen, welche neben den Stromleitungen als zusätzliche Bauteile ausgeführt sind. Eine andere Lösungsmöglichkeit besteht in der integrativen Konstruktion von Stromleitungen und Kühlfluidschläuchen.

Einen integrativen Kühlungskonzeptansatz zeigt beispielsweise die WO 2017/133893 A1. Vorgestellt wird eine Kabelanordnung umfassend ein Kabel mit einem Kabelschlauch und einem angeordneten Leiter. Der Kabelschlauch ist in einem Abstand vom Leiter angeordnet und bildet einen ersten Zwischenraum zwischen dem mindestens Leiter und dem Kabelschlauch. Mindestens ein Rohr zum Fördern eines Kühlfluids und ein Verbindungsstück, das mindestens ein Kontaktelement umfasst, das mit dem mindestens einen Leiter verbunden ist, und eine Kammer. Die Kammer umfasst einen ersten Anschluss der mit dem ersten Überwachungsraum zwischen dem mindestens einen Leiter und dem Kabelschlauch verbunden ist, und einen zweiten Anschluss, der mit dem mindestens einen Rohr verbunden ist.

Nachteilig bei den im Stand der Technik angebotenen Lösungen sind die häufig sehr komplizierten und verwinkelten Strömungskanäle des Kühlfluides innerhalb des Ladesteckers. Das bewirkt oftmals eine Verschlechterung der Kühlleistung und zieht sehr aufwändige Spritzgusswerkzeuge für die Ladesteckergehäuse und Ladestecker-Einlegeteile nach sich, da Ladesteckergehäuse und Ladestecker-Einlegeteile häufig durch Kunststoffspritzgussverfahren hergestellt werden. Im Hinblick auf die Beeinflussung von Kühlleistungen finden sich im Stand der Technik Lösungen, die lediglich auf der Variation des Kühlfluidvolumenstroms basieren.

Es ist Aufgabe der Erfindung bestehende flüssigkeitsgekühlte Ladestecker weiterzuentwickeln, sodass die zuvor genannten Nachteile des Standes der Technik wenigstens teilweise reduziert und die Effektivität der Kühlungsleistung verbessert werden.

Zur Lösung der Aufgabe schlägt die Erfindung einen separaten, von den Stromleitungen unabhängigen Kühlmittelzufluss durch eine schlauchförmige Zuleitung vor, welche über einen Zuflussstutzen Kühlmittel in einen Bereich zwischen den wenigstens zwei Kontaktelementen in den Ladestecker einbringt. Separat in diesem Zusammenhang bedeutet, dass der separate Kühlmittelzufluss des Zuflussstutzens mittels einer von den Stromleitungen separaten Zuleitung erfolgt.

Die Erfindung erkennt, dass ein im mittigen Bereich und zwischen den wenigstens zwei Kontaktelementen des Ladesteckers angeordneter Kühlmittelzufluss geeignet ist, einen weitgehend symmetrischen Zufluss von Kühlmittel zu bewerkstelligen und in geometrisch einfacher Weise den zugeführten Kühlmittelvolumenstrom in wenigstens zwei Teilkühlmittelvolumenströme zu überführen. Symmetrischer Zufluss bedeutet, dass die Teilkühlmittelvolumenströme zu den Kontaktelementen ausgehend von dem zugeführten Kühlmittelvolumenstrom eine in etwa gleiche Wegstrecke zurücklegen. Wenn der Ladestecker im Inneren durch ein Einlegeteil mit Kontaktelementen aufgebaut ist erfolgt die Kühlmittelzuleitung im mittigen Bereich des Einlegeteils.

Der weitgehend symmetrische Zufluss von Kühlmittel und die einfache Kühlmittelvolumenstromführung machen es möglich, den Ladestecker und/oder das Einlegeteil konstruktiv-geometrisch einfach aufzubauen, sodass diese vorzugsweise durch Kunststoffspritzgießen herzustellenden Teile ohne Hinterschnitte und damit mittels einfacher Spritzgusswerkzeuge herstellbar sind.

Innerhalb des zugeführten Kühlmittelvolumenstromes sieht die Erfindung die Anordnung eines Temperatursensors vor. Damit ist es möglich, die Zulauftemperatur des Kühlmittels vor dem Wärmetauschen mit den Kontaktelementen zu messen. Konstruktiv besonders vorteilhaft ist es, optional den Temperatursensor geometrisch wie eine Schraube zu gestalten und das Sensorelement stirnseitig am Ende des Gewindeabschnittes zu platzieren. Diese Konstruktion unterstützt den einfachen Aufbau des Einlegeteils oder Ladesteckers und ermöglicht es, diese integrative Temperatursensorschraube sowohl als Temperatursensor als auch als lösbares Befestigungsmittel einzusetzen.

Mit der Kenntnis der Zulauf-Kühlmitteltemperatur und einer nachgelagerten Messung der Kühlmitteltemperatur nach dem Wärmetauschen mit den Kontaktelementen kann auf die Temperatur der Kontaktelemente rückgeschlossen werden und darüber hinaus die Kühlleistung bei konstantem Kühlmittelvolumenstrom durch das gezielte Absenken der Kühlmittelzulauftemperatur angepasst werden.

Besonders vorteilhaft ist die Erfindung bei Hochvolt-Ladesteckern wie beispielsweise MCS-Ladesteckern mit DC-Kontaktelementen (DC = Abkürzung von Direct current, Gleichstrom), weil hier die erforderliche Kühlleistung besonders hoch werden kann.

Die Erfindung wird im Folgenden anhand eines exemplarischen Ausführungsbeispiels in Verbindung mit den Figuren näher erläutert. Dabei zeigen:
- Fig. 1: eine Schnitt-Seitenansicht eines Einlegeteils mit Zuflussstutzen und Kunststoffdeckel;
- Fig. 2: eine Schnitt-Seitenansicht des Zuflussstutzens mit Kunststoffdeckel.

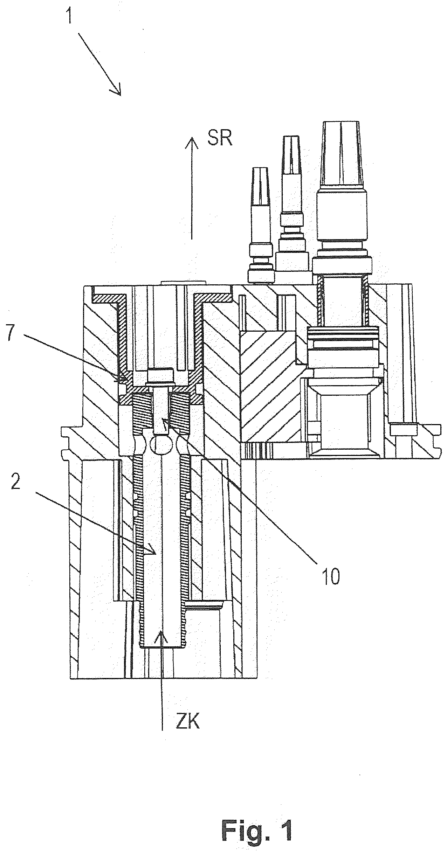

Fig. 1 zeigt eine Schnitt-Seitenansicht eines Einlegeteils 1 für einen flüssigkeitsgekühlten Ladestecker mit Zuflussstutzen 2 und Kunststoffdeckel 7. Das hier gezeigte Ausführungsbeispiel verwendet ein Einlegeteil 1 als Inlet in einem flüssigkeitsgekühlten Ladestecker (nicht dargestellt) mit einem Ladesteckergehäuse, in den das Einlegeteil 1 eingehaust ist. Alternativ kann auch ein flüssigkeitsgekühlter Ladestecker ohne Einlegeteil vorgesehen sein, bei dessen Ladesteckergehäuse die Einlegeteil-Komponenten integrativer Bestandteil sind.

Der Zuflussstutzen 2 ist in der zur Steckrichtung SR abgewandten Seite des Einlegeteils 1 eingebracht und verfügt über einer rohrförmige Grundgeometrie zur Leitung des zugeführten Kühlmittelvolumenstroms ZK. Der Kunststoffdeckel 7 ist in der zur Steckrichtung SR zugewandten Seite des Einlegeteils 1 eingebracht und verfügt über einer topfförmige Grundgeometrie mit einem Bund. Die Steckrichtung SR bezeichnet in diesem Zusammenhang die Steckrichtung des Ladesteckers für das lösbare Zusammenstecken von Ladestecker und Ladesteckerdose.

Der Kunststoffdeckel 7 kann stirnseitig über eine konzentrische, ringförmige Ausnehmung verfügen, in die der Zuflussstutzen 2 eingreift. Alternativ kann die stirnseitige Ausnehmung des Kunststoffdeckels 7 durch eine schlüsselförmige Ausnehmung gestaltet sein, in die ein korrespondierend gestalteter, endseitiger Abschnitt des Zuflussstutzens 2 eingreift und so eine Verdrehsicherung bereitgestellt wird. Alternativ oder additiv kann eine Verdrehsicherung durch eine Schlüsselflächenkombination zwischen Zuflussstutzen 2 und Einlegeteil 1 erfolgen.

Lösbar zueinander befestigt werden der auf diese Weise stirnseitig zusammengelegte Zuflussstutzen 2 und Kunststoffdeckel 7 durch einen schraubenförmigen Temperatursensor 10, der durch eine Bohrung im Topfgrund des Kunststoffdeckels 7 hindurchragt und mit seinem Aussengewinde in ein stirnseitige Innengewindebohrung des Zuflussstutzens 2 verschraubt ist. Der sensierende Teil des Temperatursensors 10 ist endseitig des Gewindeschaftes des schraubenförmigen Temperatursensors 10 angeordnet und ragt wenigstens bereichsweise in den zugeführten Kühlmittelvolumenstrom ZK. Diese Anordnung ist in zweierlei Hinsicht besonders vorteilhaft.

Durch die integrative Gestaltung des Temperatursensors 10 als Sensorelement und als Befestigungsmittel wird die Teilevielfalt reduziert. Gleichzeitig ist die Positionierung des Temperatursensors 10 mit seiner Schraubenschaftspitze hinein in den zugeführten Kühlmittelvolumenstrom ZK besonders vorteilhaft, weil dadurch die Zulauftemperatur des Kühlmittels gemessen wird.

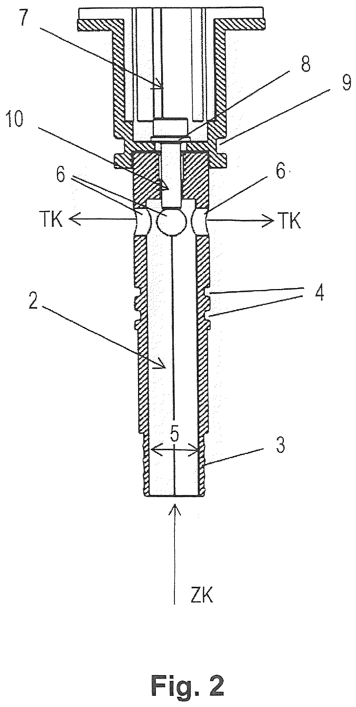

Fig. 2 zeigt eine Schnitt-Seitenansicht des Zuflussstutzens 2 mit Kunststoffdeckel 7. Der Zuflussstutzen 2 und der Kunststoffdeckel 7 sind an ihren jeweiligen Stirnseiten zusammengelegt und lösbar zueinander befestigt durch den Temperatursensor 10, welcher in integraler Weise geometrisch als Befestigungsschraube mit Schraubenkopf und Gewindeschaft ausgebildet ist. Da Gewindepaarungen nicht dichten können wird die Abdichtungsfunktion zwischen dem Zuflussquerschnitt 5 und dem Kunststoffdeckel 7 durch eine unter dem Schraubenkopf des Temperatursensors 10 platzierte Dichtscheibe 8 sichergestellt.

Die zwischen dem Einlegeteil 1 und dem Zuflussstutzen 2 erforderliche Abdichtungsfunktion wird durch wenigstens eine O-Ring-Abdichtung bereitgestellt. Dazu ist in die äußere Kontur des Zuflussstutzens wenigstens eine Zuflussstutzennut 4 eingebracht, in die ein O-Ring einlegbar ist. In diesem Ausführungsbeispiel sind zwei Zuflussstutzennuten 4 eingearbeitet, sodass die Abdichtungssicherheit erhöht wird. Der Kunststoffdeckel 7 enthält die Abdichtungsfunktion gegenüber dem Einlegeteil ebenfalls durch eine O-Ring-Abdichtung. Zu diesem Zweck verfügt der Kunststoffdeckel 7 über eine außenseitig eingebrachte, umlaufende Kunststoffdeckelnut 9, in die ein O-Ring einlegbar ist.

Der Zuflussstutzen 2 weist einen Kühlmittelschlauchanschluss 3 auf, sodass eine schlauchförmige Kühlmittelzuflussleitung anschließbar ist und ein Kühlmittelvolumenstrom in den Zuflussstutzen 2 eingebracht werden kann. Innerhalb des Zuflussstutzens 2 wird der zugeführte Kühlmittelvolumenstrom ZK im des Zuflussquerschnitt 5 geleitet. Die axiale Erstreckung des Zuflussquerschnittes 5 ist ausgehend von dem Kühlmittelschlauchanschluss 3 in den gegenüberliegenden endseitigen Bereich des Zuflussstutzens 2 hinein, in welchem sowohl der Temperatursensor 10 angeordnet als auch wenigstens zwei Querbohrungen 6 eingebracht sind. Dadurch wird in dem endseitigen Bereich der Temperatursensor 10 von dem zugeführten Kühlmittelvolumenstrom ZK umströmt. Zusätzlich bildet sich infolge der wenigstens zwei Querbohrungen 6 Umlenkung des zugeführten Kühlmittelvolumenstromes ZK in wenigstens zwei Teilkühlmittelvolumenströme TK aus. In dem in Fig. 2 gezeigten exemplarischen Ausführungsbeispiel sind drei Querbohrungen 6 vorgesehen, sodass sich drei Teilkühlmittelvolumenströme TK ausbilden.

Während der zugeführte Kühlmittelvolumenstrom ZK im Bereich des Zuflussquerschnittes 5 weitgehend laminar strömt, wird sich im Bereich der Querbohrung 6 und des Temperatursensors 10 infolge der Umlenkung des zugeführten Kühlmittelvolumenstromes ZK eine überwiegend turbulente Strömung ausbilden. Die hat zur Folge, dass die Temperaturbestimmung durch den Temperatursensor 10 in genau diesem Bereich besonders genau die Zuströmtemperatur des Kühlmittels sensiert.

Vorzugsweise ist der Zuflussstutzen 2 basierend auf einem Metallwerkstoff hergestellt. Metallwerkstoffe verfügen über eine gute Wärmeleitfähigkeit und Werkstofffestigkeit, sodass sie für den Zuflussstutzen 2 vorteilhafte Eigenschaften aufweisen. Die konstruktive Ausgestaltung von Zuflussstutzen 2 und Kunststoffdeckel 7 ermöglicht es, dass das Einlegeteil 1 und/oder das Ladesteckergehäuse sehr spritzgussgünstig und weitgehend ohne Hinterschnitte herstellbar und sehr einfach aus dem Spritzgusswerkzeug entformbar sind.

### Bezugszeichenliste

- 1: Einlegeteil
- 2: Zuflussstutzen
- 3: Kühlmittelschlauchanschluss
- 4: Zuflussstutzennut
- 5: Zuflussquerschnitt
- 6: Querbohrung
- 7: Kunststoffdeckel
- 8: Dichtscheibe
- 9: Kunststoffdeckelnut
- 10: Temperatursensor

- SR: Steckrichtung
- TK: Teilkühlmittelvolumenstrom
- ZK: zugeführter Kühlmittelvolumenstrom

## Patentansprüche

1. Flüssigkeitsgekühlter Ladestecker mit wenigstens zwei Kontaktelementen zur lösbaren, elektrisch leitenden Verbindung eines batterieelektrischen Fahrzeugs mit einer Ladestation, aufweisend ein Ladesteckergehäuse zur Einhausung der wenigstens zwei Kontaktelemente, **dadurch gekennzeichnet, dass** in einem mittigen Bereich zwischen den wenigstens zwei Kontaktelementen ein separater Zuflussstutzen (2) angeordnet ist, der einen weitgehend symmetrischen Zufluss von Kühlmittel unterstützt.

2. Flüssigkeitsgekühlter Ladestecker gemäß Anspruch 1, **dadurch gekennzeichnet, dass** der Zuflussstutzen (2) einen Zuflussquerschnitt (5) zur Leitung eines zugeführten Kühlmittelvolumenstroms (ZK) aufweist.

3. Flüssigkeitsgekühlter Ladestecker gemäß Anspruch 1, **dadurch gekennzeichnet, dass** der Zuflussstutzen (2) einen Kühlmittelschlauchanschluss (3) zur Kopplung eines separaten Kühlmittelschlauches aufweist.

4. Flüssigkeitsgekühlter Ladestecker gemäß Anspruch 2, **dadurch gekennzeichnet, dass** der Zuflussstutzen (2) wenigstens zwei Querbohrungen (6) aufweist, sodass der zugeführte Kühlmittelvolumenstrom (ZK) in wenigstens zwei Teilkühlmittelvolumenströme (TK) umgelenkt ist.

5. Flüssigkeitsgekühlter Ladestecker gemäß Anspruch 1, **dadurch gekennzeichnet, dass** in die äußere Kontur des Zuflussstutzens (2) wenigstens eine Zuflussstutzennut (4) eingebracht ist.

6. Flüssigkeitsgekühlter Ladestecker gemäß Anspruch 1, **dadurch gekennzeichnet, dass** stirnseitig des Zuflussstutzens (2) ein Temperatursensor (10) angeordnet ist.

7. Flüssigkeitsgekühlter Ladestecker gemäß Anspruch 6, **dadurch gekennzeichnet, dass** der Temperatursensor (10) zumindest abschnittsweise schraubenförmig ist und einen Gewindeschaft aufweist, der in eine stirnseitige Gewindebohrung des Zuflussstutzens (2) eingeschraubt ist.

8. Flüssigkeitsgekühlter Ladestecker gemäß Anspruch 7, **dadurch gekennzeichnet, dass** der Temperatursensor (10) endseitig seines Gewindeschaftes eine Einrichtung zur Temperatursensierung aufweist.

9. Flüssigkeitsgekühlter Ladestecker gemäß Anspruch 1, **dadurch gekennzeichnet, dass** ein Kunststoffdeckel (7) zu dem Zuflussstutzen (2) axial fluchtend, in Steckrichtung (SR) vor dem Zuflussstutzen (2) und an der Stirnseite des Zuflussstutzens (2) angeordnet ist.

10. Flüssigkeitsgekühlter Ladestecker gemäß Anspruch 9, **dadurch gekennzeichnet, dass** der Kunststoffdeckel (7) eine außenseitig eingebrachte, umlaufende Kunststoffdeckelnut (9) aufweist.

11. Flüssigkeitsgekühlter Ladestecker gemäß Anspruch 7 und 9, **dadurch gekennzeichnet, dass** der Zuflussstutzen (2) an seinem stirnseitigen Ende mit dem Kunststoffdeckel (7) zusammengelegt und mit dem schraubenförmigen Temperatursensor (10) lösbar befestigt ist.

12. Flüssigkeitsgekühlter Ladestecker gemäß Anspruch 11, **dadurch gekennzeichnet, dass** unter dem Schraubenkopf des Temperatursensors (10) eine Dichtscheibe (8) angeordnet ist.

13. Flüssigkeitsgekühlter Ladestecker gemäß einem der vorgehenden Ansprüche, **dadurch gekennzeichnet, dass** der flüssigkeitsgekühlte Ladestecker ein MCS-Ladesteckern mit DC-Kontaktelementen ist.
